## Europäisches Patentamt
## European Patent Office
## Office européen des brevets

(19)

(11) Veröffentlichungsnummer: **0 035 631**
A2

## (12) EUROPÄISCHE PATENTANMELDUNG

(21) Anmeldenummer: **81100363.1**

(22) Anmeldetag: **19.01.81**

(51) Int. Cl.³: **C 08 K 3/22**
**C 08 K 5/00**

(30) Priorität: **30.01.80 DE 3003193**

(43) Veröffentlichungstag der Anmeldung:
**16.09.81 Patentblatt 81/37**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Brandstetter, Franz, Dr.**
**Ritterbuechel 45**
**D-6730 Neustadt(DE)**

(72) Erfinder: **Lindenschmidt, Gerhard, Dr.**
**Buchenweg 11**
**D-6906 Leimen(DE)**

(72) Erfinder: **Naarmann, Herbert, Dr.**
**Haardtblick 15**
**D-6719 Wattenheim(DE)**

(72) Erfinder: **Penzien, Klaus, Dr.**
**Bensheimer Ring 18**
**D-6710 Frankenthal(DE)**

(54) **Thermoplastische Formmassen und Formteile aus diesen.**

(57) Selbstverlöschende thermoplastische Formmasse, enthaltend ein thermoplastisches Harz, ein Flammschutzmittel und als Synergisten für das Flammschutzmittel Zinn-(IV)oxid sowie übliche Zusatzstoffe für die Formulierung der Formmasse. Der Synergist muß eine Korngröße ($d_{90}$-Wert) $< 20\,\mu$ aufweisen bei einer mittleren Kornverteilung ($d_{50}$-Wert), die 10 bis 1,1 $\mu$ aufweist. Formmassen, unter Verwendung des Synergisten $SnO_2$ hergestellt, besitzen eine höhere Kerbschlagzähigkeit und eine günstigere Witterungsbeständigkeit gegenüber Massen vom Stand der Technik. Die Formmassen können durch Spritzgießen zu selbstverlöschenden Formkörpern oder Profilen verarbeitet werden.

EP 0 035 631 A2

BASF Aktiengesellschaft

O.Z. 0050/034259

Thermoplastische Formmassen und Formteile aus diesen

Die Erfindung betrifft selbstverlöschende thermoplastische Formmassen, die nach Berührung mit einer heißen Flamme nichtbrennend abtropfen, d.h. in eine der Brandklassen 94 VE-0, 94 VE-1 oder 94 VE-2 eingeordnet werden können. Die erfindungsgemäßen Formmassen enthalten ein thermoplastisches Harz, ein Halogen enthaltendes organisches Flammschutzmittel und Zinn-(IV)-oxid einer bestimmten Teilchengröße und Verteilung als Synergisten für das Flammschutzmittel, sowie gegebenenfalls Zusatzstoffe.

Zum Stand der Technik verweisen wir auf:
(1)     Vogel "Flammfestmachen von Kunststoffen", Hüthig-Verlag (1966), Seiten 94 bis 102
(2)     DE-OS 23 28 517
(3)     DE-OS 25 41 256
(4)     US-PS 3 418 267
(5)     DE-OS 27 39 429.

Die Flammfestausrüstung von thermoplastischen Kunststoffen mit halogenhaltigen organischen Verbindungen ist aus (1) bekannt. Man weiß auch, daß bei Anwendung verhältnismäßig großer Mengen an Flammschutzmitteln und unter gleichzeitiger Verwendung von Synergisten, wie Verbindungen des Antimons, des Arsens, des Bors oder des Zinns die Thermoplasten nach Entzündung mit einer heißen Flamme nichtbrennend abtropfen (vgl. (2) und (3) . Schließlich ist aus (4) bekannt, $SnO_2$ als Synergist für ein Flammschutzmittel in Polyamiden zu verwenden. In (5) sind feuerverzögernde thermoplastische Harzmassen beschrieben, die bestehen aus:

100 Gew.-Teilen eines thermoplastischen Harzes,

Vo/BL

0035631

etwa 40 bis 150 Gew.-Teilen einer magnesiumhaltigen anorganischen Verbindung, sowie

einem feuerverzögernden Hilfsmittel (Synergisten).

Das Hilfsmittel ist entweder auf Basis einer Kombination von Alkalichlorid mit einer anorganischen Zinn- oder Vanadinverbindung aufgebaut. In (5) wird allgemein darauf hingewiesen, sowohl die Alkalichloride als auch die Zinn- und Vanadinverbindungen möglichst in fein verteilter Form z.B. als Pulver mit einem durchschnittlichen Teilchendurchmesser von nicht mehr als $1\,\mu$ zu verwenden.

Selbstverlöschende Formmassen sollen verschiedene Anforderungen erfüllen. So wird vom Verarbeiter die Bedingung gestellt, daß die Formmassen keine unerwünschten Verfärbungen zeigen bzw. daß keine Korrosion an den Verarbeitungsmaschinen auftritt. Eine solche Korrosion wird häufig beobachtet bei Kombinationen von halogenhaltigen organischen Verbindungen mit Synergisten. Gelegentlich treten auch, insbesondere bei Kombinationen von organischen Halogenverbindungen mit Antimonoxid als Synergist Vergrauungen auf, da Antimonoxid gelegentlich durch Zusatzstoffe zum Metall reduziert wird. Andererseits sind wirksame Synergisten, wie Antimonoxid, beliebt, da sie schon in geringer Menge angewendet werden können und somit zu keiner nennenswerten Verminderung der Zähigkeit der Thermoplaste führen. Aus diesem Grunde ist auch vorwiegend Antimontioxid als Synergist für organische Flammschutzmittel verwendet worden. Beim Einarbeiten von Antimontrioxid treten jedoch toxikologische Probleme auf. Die aus (5) bekannten thermoplastischen Massen erfüllen zwar bei der Flammschutzprüfung die Vorschriften gemäß UL 94. Sie weisen jedoch keine ausreichende Schlagzähigkeitswerte mehr auf, da sie einen großen Anteil an anorganischen Verbindungen enthalten.

Es bestand daher die Aufgabe, selbstverlöschende thermoplastische Formmassen vorzuschlagen, die keine Antimonverbindungen enthalten und die nach Entzündung mit einer heißen Flamme nicht brennend abtropfen, wenig UV-empfindlich sind, sich wenig verfärben und ein gutes Zähigkeitsverhalten aufweisen. Die Aufgabe wird gelöst durch die Maßnahmen gemäß kennzeichnenden Teil des Patentanspruchs 1.

Die Erfindung betrifft eine thermoplastische Formmasse,
masse,
enthaltend

A   wenigstens ein thermoplastisches Harz,

B   2-25 Gew.-Teile, bezogen auf 100 Gew.-Teile von A, einer Chlor- und/oder Brom enthaltenden organischen Verbindung (Flammschutzmittel) und

C   1 bis 10 Gew.-Teile, bezogen auf 100 Gew.-Teile von A, einer Zinnverbindung (Synergist), gegebenenfalls zusätzlich enthaltend

D   übliche Zusatzstoffe in wirksamen Mengen.

Diese Formmasse ist dadurch gekennzeichnet, daß Zinn-(IV)-oxid als Synergist C für die Herstellung der Formmasse verwendet wird, das eine Korngröße, bestimmt nach der Sedimentationsanalyse von $d_{90} \leqq 20 /u$, bei einer mittleren Kornverteilung $d_{50} = 10$ bis $1,1 /u$ aufweist.

Die Komponente A der erfindungsgemäßen Formmassen soll wenigstens ein thermoplastisches, handelsübliches, Harz sein. Dieses Harz kann ein Homo- oder Copolymerisat eines thermoplastischen Kunststoffes sein. Es können auch Mischungen verschiedener thermoplastischer Kunststoffe, die nachstehend aufgeführt sind, verwendet werden. Als

0035631

thermoplastische Kunststoffe kommen in Betracht: Polyäthylen, Polypropylen, Polyisobutylen, Polystyrol, Copolymerisate des Styrols mit Acrylnitril, mit Maleinsäureanhydrid, mit Maleinsäureestern und mit Acrylsäureestern. Ferner sind geeignet Copolymerisate des Styrols mit $\alpha$-Methylstyrol. Es kommen ferner in Betracht Polyamide sowie Polyester. Besonders bevorzugt werden schlagfeste Thermoplaste wie schlagfestes Polystyrol, ABS und Acrylnitril-Styrol-Copolymerisate, die als weitere Komponente einen gepfropften Kautschuk auf Silikon-Acrylat- oder EPDM-Basis enthalten können. Als Kautschuke zur Verstärkung von Polystyrol oder von Acrylnitril-Copolymerisaten können auch Mischpolymerisate des Butadiens oder Isoprens mit 10 bis 70 Gew.-% Styrol in Frage kommen. Vorzugsweise verwendet man Blockcopolymerisate der allgemeinen Formel $(X-Y)_n$ oder $(X-Y)_n-X$, wobei X Styrol, Y Butadien oder Isopren und n eine ganze Zahl zwischen 1 und 3 ist. Bezogen auf 100 Gew.-Teile Polystyrol oder Styrol-Acrylnitrilcopolymerisat sollen 2 bis 20, vorzugsweise 3 bis 12 Teile des Verstärkerkautschuks eingearbeitet werden. Die Menge an Verstärkerkautschuk richtet sich nach der gewünschten Zähigkeit des Thermoplasten.

Als Flammschutzmittel, Komponente B der erfindungsgemäßen Formmassen, kommen Halogen enthaltende organische Verbindungen, die in der Monographie (1) beschrieben sind, in Betracht. Geeignete Flammschutzmittel aus (1) sind: Octabromhexadecan, chlorierte Paraffine, die etwa 70 Gew.% Chlor enthalten, halogenhaltige Diels-Alder-Addukte und halogenhaltige Diphenyle.

Besonders bevorzugt werden angewendet: kernhalogenierte Styrol-Oligomere, die 40 bis 80 Gew.% Halogen enthalten, und einen mittleren Polymerisationsgrad

0035631

von 3 bis 200 aufweisen. Deren Herstellung ist z.B. aus der DE-OS 25 37 385 bekannt.

Ferner werden bevorzugt die Bis-(Tribromphenoxi)-alkylene (vgl. DE-OS 23 28 517), hiervon insbesondere das Bis-(Tribromphenoxi)-äthan, sowie die Okta-Nona- und Deca-Brom-Diphenyle bzw. die entsprechenden Diphenyläther.

Die genannten Flammschutzmittel können einzeln oder auch in Mischungen untereinander in Mengen von 2-25 Gew.%-Teilen, bezogen auf 10 Gew.-Teile A, angewendet werden. Innerhalb des genannten Bereiches kann der den jeweils verwendeten Thermoplasten günstigste Wert ohne weiteres vom Fachmann ermittelt werden.

Als Synergist C für die organischen Flammschutzmittel werden erfindungsgemäß 1 bis 10, vorzugsweise 2 bis 6 Gew.-Teile Zinn-(IV)-oxid, bezogen auf die Komponente A, verwendet. Als Zinnoxid kann ein technisches Produkt verwendet werden, das nach der Mahlung eine Korngröße in dem nachstehend genannten Bereich, bestimmt durch Sedimentationsanalyse, aufweisen soll: 90 Gew.% aller Teilchen sollen eine Korngröße gleich oder kleiner als 20 $\mu$ aufweisen, wobei gleichzeitig die mittlere Kornverteilung ($d_{50}$-Wert) im Bereich von 10 bis 1,1 $\mu$ liegen soll.

Die erfindungsgemäßen Formmassen können gegebenenfalls übliche Zusatzstoffe enthalten (Komponente D). Als Zusatzstoffe kommen bekannte und bewährte Stabilisatoren, wie sterisch gehinderte Phenole und organische Phosphite in Betracht, die in üblichen Mengen von jeweils 0,01 bis 0,5 Teilen, bezogen auf A, angewendet werden.

Ferner sind anwendbar Füllstoffe, Farbpigmente, Gleitmittel, Weichmacher, Antistatika oder Treibmittel in
üblichen, dem Fachmann bekannten Mengen.

Die Einarbeitung des Flammschutzmittels, des Synergisten
sowie der evtl. verwendeten Zusatzstoffe können nach einen geeigneten und bekannten Mischverfahren, z.B. in
Extruder, Knetern oder Walzen erfolgen.

Insbesondere können die Komponenten B, C und D auch in
Form eines Konzentrates in dem gewünschten Thermoplasten
in Granulat- oder Pulverform in einen weiteren Teil des
Thermoplasten eingearbeitet werden, um die gewünschte
Zusammensetzung zu erzielen.

Die erfindungsgemäßen Formmassen können durch Spritzgießen
oder Strangpressen zu selbstverlöschenden Formkörpern
oder Profilen verarbeitet werden.

Die Korngröße bzw. Korngrößenverteilung wird mittels Sedimentationsanalyse in einem Sedigraph 5000 D der Fa. Coulter Electronics bestimmt. Dazu werden 1,5 Gew.-Teile
Zinn-IV-oxid in 100 Gew.-Teilen destilliertem Wasser
das 3 Gew.-Teile einer Kombination waschaktiven Substanzen erhält, gegeben. Die Dispergierung erfolgt 0,17 Stdn
bei 23°C mit einem Vibromischer El der Fa. Chemap AG.

Die Flammschutzprüfung erfolgt im vertikalen Brandtest
nach den Vorschriften der Underwriter Laboratories zwecks
Einordnung in eine der Brandklassen 94 VE-0, 94 VE-1 oder
94 VE-2.

Die Kerbschlagzähigkeiten wurden an bei verschiedenen
Temperaturen hergestellten Prüfkörpern nach DIN 53343
gemessen.

Die Witterungsbeständigkeit und UV-Beständigkeit wurde bestimmt an Prüfkörpern mit den Abmessungen 50 x 12 x 3 mm, die aus Granulat bei 200°C durch Pressen hergestellt worden waren. Dazu wurden die Prüfkörper über einen Zeitraum von 72 Stunden bei einer relativen Luftfeuchtigkeit von ca. 90 % mit einem Xenotestgerät 1200 der Firma Heraeus, Hanau, belichtet. Es wurde in Intervallen von 24 Stunden beurteilt.

Die Erfindung wird nachstehend anhand der Beispiele und anhand von Vergleichsversuchen näher erläutert. Die in den Beispielen und Versuchen genannten Teile und Prozente beziehen sich, sofern nichts anderes vermerkt ist, auf das Gewicht.

0035631

## Beispiele und Vergleichsversuche

Die in den Tabellen 1 bis 3 angegebenen Gewichtsteile Flammschutzmittel, zusammen mit dem Synergisten und eventuellen Zusätzen wurden in einem Fluidmischer der Fa. Henschel, Kassel, bei $40^{\circ}C$ vermengt. Das Gemisch aus diesen Komponenten wurde dann mit den in der Tabellen 1 bis 3 angegebenen Gew.-Teilen des thermoplastischen Harzes auf einem Extruder bei den genannten Temperaturen aufgeschmolzen, homogenisiert und anschließend granuliert.

Als Synergist C wurde in den Beispielen 1 bis 3 Zinn-(IV)-oxid verwendet, dessen Korngröße, bestimmt nach der Sedimentationsanalyse einen $d_{90}$-Wert $\leqq 10\,\mu$, bei einer mittleren Korngrößenverteilung, $d_{50}$, von 2 bis $3\,\mu$, aufwies; für die Beispiele 4 bis 8 wurde $SnO_2$ mit den folgenden Spezifikationen verwendet:

$d_{90} \leqq 20\,\mu$ bei einer mittleren Korngrößenverteilung $d_{50}$ von 5 bis $6\,\mu$.

In den Vergleichsversuchen A bis H wurde $Sb_2O_3$ als alleiniger Synergist verwendet; in den Versuchen I bis L wurde Zinn-(IV)-oxid mit einem $d_{90}$-Wert $> 100$ und einem $d_{50}$-Wert im Bereich von 20 bis $30\,\mu$ angewendet. Die Versuche M bis O schließlich, repräsentieren den Stand der Technik, wie er aus (5) bekannt ist. Bei der Durchführung der beschriebenen Versuche wurde in der Mehrzahl der Fälle ein übliches Antioxidans, sowie ein Füllstoff, stellvertretend für die in Frage kommenden Zusatzstoffe, ausgewählt.

Wie aus einem Vergleich der Ergebnisse der Beispiele 1 bis 8 und der Versuche A bis H hervorgeht, besitzen die erfindungsgemäßen Formmassen eine höhere Kerbschlagzähigkeit und eine günstigere Witterungsbeständigkeit gegenüber den Massen, wie sie bei den Versuchen A bis H erzielt worden sind. Gegenüber den in den Versuchen M bis O beschriebenen Massen, weisen die erfindungsgemäßen Formmassen eine bessere Mechanik auf. Die in den Versuchen I bis L erhaltenen Ergebnisse, in Verbindung mit den Ergebnissen der Beispiele 1 bis 8, belegen, daß die erfindungsgemäße Wirkung von der Korngröße und der Korngrößenverteilung des verwendetetn Zinn-(IV)-oxids abhängig ist.

Tabelle 1

| Beispiel (erfindungs-gemäß) | Komponente A | Gew.-Teile | Komponente B | Gew.-Teile | Komponente C | Gew.-Teile |
|---|---|---|---|---|---|---|
| 1 | schlagzähes Polystyrol[4]) | 80 | Chlorparaffin mit 70 Gew.-T. Chlor | 15,7 | Zinn-IV-oxid | 5 |
| 2 | ABS[5]) | 77,8 | Bis(Tribromphenoxy)ethan | 18 | Zinn-IV-oxid | 4 |
| 3 | ABS[6]) | 74,8 | bromiertes Oligostyrol | 20 | Zinn-IV-oxid | 5 |
| 4 | ABS[5]) | 77,7 | Mischung bromiertes Oligostyrol und Dekabromdiphenyl | 10 7,1 | Zinn-IV-oxid | 4 |
| 5 | LDPE | 87,7 | Dekabromdiphenylether | 8 | Zinn-IV-oxid | 4 |
| 6 | HDPE | 80 | Dekabromdiphenyl | 11 | Zinn-IV-oxid | 9 |
| 7 | Polypropylen | 60 | Dekabromdiphenylether | 22 | Zinn-IV-oxid | 5 |
| 8 | Polyamid 6 | 86 | Dekabromdiphenylether | 10 | Zinn-IV-oxid | 4 |

Tabelle 1 (Forts.)

| Beispiel (erfindungs- gemäß) | Kompo- nente D | Gew.- Teile | Konfektionier- temperatur ($^\circ$C) | Kerbschlag- zähigkeit KJ/m$^2$ 23$^\circ$C | Brandklasse nach UL-94 | Witterungsbestän- digkeit Zeitraum(h) 0 | | 24 | 48 | 72 |
|---|---|---|---|---|---|---|---|---|---|---|
| 1 | I$^2$) | 0,3 | 190 | 5 | VE-2 | 1 | 1-2 | 2 | 3 | |
| 2 | II$^2$) | 0,2 | 230 | 13 | VE-0 | 1 | 1-2 | 2 | 3 | |
| 3 | II$^2$) | 0,2 | 250 | 15 | VE-0 | 1 | 2 | 3 | 3 | |
| 4 | II$^2$) | 0,2 | 250 | 7 | VE-0 | 1 | 2 | 2 | 3 | |
| 5 | I$^2$) | 0,3 | 200 | 3$^3$) | VE-2 | 1 | 1 | 2 | 3 | |
| 6 | | | 270 | 5$^3$) | VE-0 | 1 | 1 | 2 | 3 | |
| 7 | Talkum | 13 | 190 | 6 | VE-0 | 1 | 1 | 2 | 3 | |
| 8 | | | 240 | 12 | VE-0 | 1 | 2 | 3 | 3 | |

1) Benotung der Verfärbung umfaßt die Werte 1 (weiß) bis 6 (braun)

2) Komponente D : I ≡ 2,6-Di-tert.-butyl-p-cresol; II ≡ 4,4'-Butyliden-bis-(3'-methyl-6-tert.-butyl-phenol)

3) Prüftemperatur -40$^\circ$C; 4) enthält 8 Gew.-Teile Polybutadien;

5) enthält 22 Gew.-Teile Polybutadien; 6) enthält 25 Gew.-Teile Polybutadien

O.Z. 0050/034259

0035631

Tabelle 2

| Vergleichsversuche (nicht erfindungsgem.) | Komponente A | Gew.-Teile | Komponente B | Gew.-Teile | Komponente C | Gew.-Teile |
|---|---|---|---|---|---|---|
| A | schlagzähes Polystyrol[4]) | 80 | Chlorparaffin mit 70 Gew.-T. Chlor | 15,7 | Antimontrioxid | 5 |
| B | ABS[4]) | 77,8 | Bis(Tribromphenoxy)ethan | 18 | Antimontrioxid | 4 |
| C | ABS[4]) | 74,8 | bromiertes Oligostyrol | 20 | Antimontrioxid | 5 |
| D | ABS[4]) | 77,7 | Mischung bromiertes Oligostyrol und Dekabromdiphenyl | 10 ... 7,1 | Antimontrioxid | 4 |
| E | LDPE[4]) | 87,7 | Dekabromdiphenylether | 8 | Antimontrioxid | 4 |
| F | HDPE[4]) | 80 | Dekabromdiphenyl | 11 | Antimontrioxid | 9 |
| G | Polypropylen[4]) | 60 | Dekabromdiphenylether | 22 | Antimontrioxid | 5 |
| H | Polyamid 6[4]) | 86 | Dekabromdiphenylether | 10 | Antimontrioxid | 4 |

Tabelle 2 (Forts.)

| Vergleichsversuche (nicht erfindungsgem.) | Komponente D | Gew.-Teile | Konfektioniertemperatur (°C) | Kerbschlagzähigkeit KJ/m² 23°C | Brandklasse nach UL-94 | Witterungsbeständigkeit Zeitraum(h) | | | |
|---|---|---|---|---|---|---|---|---|---|
| | | | | | | 0 | 24 | 48 | 72 |
| A | I[2]) | 0,3 | 190 | 3 | VE-2 | 2 | 3 | 4 | 5 |
| B | II[2]) | 0,2 | 230 | 8 | VE-0 | 2 | 3 | 4 | 5 |
| C | II[2]) | 0,2 | 250 | 10 | VE-0 | 2 | 4 | 5 | 5 |
| D | II[2]) | 0,2 | 250 | 5 | VE-0 | 2 | 3-4 | 4 | 5 |
| E | I[2]) | 0,3 | 200 | 1[3]) | VE-2 | 2 | 2 | 3 | 4 |
| F | | | 270 | 3[3]) | VE-0 | 2 | 2-3 | 3 | 4 |
| G | Talkum | 13 | 190 | 4 | VE-0 | 1 | 2 | 3 | 4 |
| H | | | 240 | 8 | VE-0 | 2 | 3 | 3 | 4 |

1) Benotung der Verfärbung umfaßt die Werte 1 (weiß) bis 6 (braun)

2) Komponente D : I ≡ 2,6-Di-tert.-butyl-p-cresol; II ≡ 4,4'-Butyliden-bis-(3'-methyl-6-tert.-butyl-phenol)

3) Prüftemperatur -40°C

4) Komponente A der Vergleichsversuche A-M entsprechen den Komponenten A der Beispiele 1-8

Tabelle 3

| Vergleichsversuche (nicht erfindungsgem.) | Komponente A | Gew.-Teile | Komponente B | Gew.-Teile | Komponente C | Gew.-Teile |
|---|---|---|---|---|---|---|
| I | Schlagzähes Polystyrol[4]) wie Beispiel 1 | 80 | Chlorparaffin mit 70 Gew.-T. Chlor | 15,7 | Zinn-IV-oxid $d_{50}$>20/μm | 5 |
| J | ABS wie Beispiel 2 | 77,8 | Bis(Tribromphenoxy)ethan | 18 | Zinn-IV-oxid $d_{50}$>20/μm | 4 |
| K | ABS wie Beispiel 3 | 74,8 | bromiertes Oligostyrol | 20 | Zinn-IV-oxid $d_{50}$>30/μm | 5 |
| L | ABS wie Beispiel 4 | 77,7 | Mischung bromiertes Oligostyrol und Dekabromdiphenyl | 10 / 7,1 | Zinn-IV-oxid $d_{50}$>30/μm | 4 |
| M | Polypropylen wie Beispiel 7 | 49,2 | Magnesiumhydroxid / Kaliumchlorid | 49,3 / 1,5 | - | |
| N | Polypropylen wie Beispiel 7 | 57,7 | Magnesiumhydroxid / Kaliumchlorid | 40,4 / 1,6 | $Na_2Sn(OH)_6$ | 0,3 |
| O | Schlagzähes Polystyrol wie Beispiel 1 | 54,8 | Magnesiumhydroxid / Kaliumchlorid | 43,8 / 1,4 | - | |

Tabelle 3 (Forts.)

| Vergleichs-versuche (nicht erfindungsgem.) | Kompo-nente D | Gew.-Teile | Konfektionier-temperatur ($^{o}$C) | Kerbschlag-zähigkeit $KJ/m^2$ $23^{o}C$ | Brandklasse nach UL-94 | Witterungsbestän-digkeit Zeitraum(h) | | | |
|---|---|---|---|---|---|---|---|---|---|
| | | | | | | 0 | 24 | 48 | 72 |
| I | I[2]) | 0,3 | 190 | 3 | VE-2 | 1 | 1-2 | 2 | 3 |
| J | II[2]) | 0,2 | 230 | 8 | VE-ó | 1 | 2 | 2 | 3 |
| K | II[2]) | 0,2 | 250 | 10 | VE-0 | 1 | 2 | 3 | 3 |
| L | II[2]) | 0,2 | 250 | 5 | VE-0 | 1 | 2 | 2 | 3 |
| M | - | | 190 | 3 | VE-0 | 1 | 2 | 2 | 3 |
| N | - | | 190 | 4 | VE-0 | 1 | 1 | 2 | 3 |
| O | - | | 190 | 2 | VE-0 | 1 | 2 | 2 | 3 |

1) Benotung der Verfärbung umfaßt die Werte 1 (weiß) bis 6 (braun)

2) Komponente D: I ≡ 2,6-Di-tert.-butyl-p-cresol; II ≡ 4,4'-Butyliden-bis-(3'-methyl-6-tert.-butyl-phenol)

O.Z. 0050/034259

0035631

Patentansprüche

1. Thermoplastische Formmasse, enthaltend

A   wenigstens ein thermoplastisches Harz,

B   2 bis 25 Gew.-Teile, bezogen auf 100 Gew.-Teile von A, einer Chlor- und/oder Brom enthaltenden organischen Verbindung (Flammschutzmittel) und

C   1 bis 10 Gew.-Teile, bezogen auf 100 Gew.-Teile von A, einer Zinnverbindung (Synergist), gegebenenfalls enthaltend

D   übliche Zusatzstoffe in wirksamen Mengen, dadurch gekennzeichnet, daß Zinn-(IV)oxid als Synergist C für die Herstellung der Formmasse verwendet wird, das eine Korngröße, bestimmt nach der Sedimentationsanalyse, von $d_{90} \leqq 20\,\mu$, bei einer mittleren Kornverteilung $d_{50} = 10$ bis $1,1\,\mu$ aufweist.

2. Formteile aus Formmassen gemäß Anspruch 1.